(19) **Europäisches Patentamt / European Patent Office / Office européen des brevets**

(11) **EP 3 852 460 A1**

(12) **EUROPEAN PATENT APPLICATION**
published in accordance with Art. 153(4) EPC

(43) Date of publication:
**21.07.2021 Bulletin 2021/29**

(21) Application number: **18933519.3**

(22) Date of filing: **11.09.2018**

(51) Int Cl.:
**H04W 72/04** $^{(2009.01)}$     **H04W 16/28** $^{(2009.01)}$

(86) International application number:
**PCT/JP2018/033709**

(87) International publication number:
**WO 2020/053978 (19.03.2020 Gazette 2020/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **NTT DOCOMO, INC.**
**Chiyoda-ku**
**Tokyo 100-6150 (JP)**

(72) Inventors:
• **MATSUMURA, Yuki**
  **Tokyo 100-6150 (JP)**

• **NAGATA, Satoshi**
  **Tokyo 100-6150 (JP)**
• **WANG, Jing**
  **Beijing 100190 (CN)**
• **HOU, Xiaolin**
  **Beijing 100190 (CN)**

(74) Representative: **Hoffmann Eitle**
**Patent- und Rechtsanwälte PartmbB**
**Arabellastraße 30**
**81925 München (DE)**

(54) **USER EQUIPMENT AND WIRELESS COMMUNICATION METHOD**

(57) An uplink control channel based on a plurality of downlink signals can be appropriately transmitted. A user terminal includes a receiving section that receives a plurality of downlink signals and a control section that determines an uplink control channel resource and spatial relation information for transmission of at least one piece of uplink control information based on the plurality of downlink signals.

FIG. 4

EP 3 852 460 A1

**Description**

Technical Field

The present disclosure relates to a user terminal and a radio communication method in next-generation mobile communication systems.

Background Art

In UMTS (Universal Mobile Telecommunications System) networks, the specifications of Long Term Evolution (LTE) have been drafted for the purpose of further increasing high speed data rates, providing lower latency and so on (see Non-Patent Literature 1). For the purpose of further high capacity, advancement of LTE (LTE Rel. 8, Rel. 9), and so on, the specifications of LTE-A (LTE-Advanced, LTE Rel. 10, Rel. 11, Rel. 12, Rel. 13) have been drafted.

Successor systems of LTE (referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14," "LTE Rel. 15" (or later versions), and so on) are also under study.

In existing LTE systems (for example, LTE Rel. 8 to Rel. 13), a user terminal (UE (User Equipment)) periodically and/or aperiodically transmits channel state information (CSI) to a base station. The UE transmits the CSI by using an uplink control channel (PUCCH (Physical Uplink Control Channel)) and/or an uplink shared channel (PUSCH (Physical Uplink Shared Channel)).

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), a study is conducted about reception, by the user terminal, of a plurality of downlink signals from a respective plurality of transmission points.

The user terminal determines a time resource, a frequency resource, and a spatial resource (for example, spatial relation information, beams, and spatial domain filters), and uses the determined resources to transmit an uplink control channel. However, unless the user terminal having received the plurality of downlink signals appropriately transmits the uplink control channel based on the plurality of downlink signals, problems such as degraded communication quality may occur.

Thus, an object of the present disclosure is to provide a user terminal and a radio communication method that can appropriately transmit an uplink control channel based on a plurality of downlink signals.

Solution to Problem

A user terminal according to an aspect of the present disclosure includes a receiving section that receives a plurality of downlink signals and a control section that determines an uplink control channel resource and spatial relation information for transmission of at least one piece of uplink control information based on the plurality of downlink signals.

Advantageous Effects of Invention

According to an aspect of the present disclosure, an uplink control channel based on a plurality of downlink signals can be appropriately transmitted.

Brief Description of Drawings

FIG. 1 is a diagram to show an example of PUCCH spatial relation information indication MAC CEs;
FIG. 2 is a diagram to show an example of numbers related to PUCCH resources;
FIG. 3A and FIG. 3B are diagrams to show an example of transmission from a plurality of transmission points;

FIG. 4 is a diagram to show an example of a UCI transmission method according to Aspect 1;

FIG. 5 is a diagram to show an example of a UCI transmission method according to Aspect 2-1;

FIGS. 6A and 6B are diagrams to show an example of numbers related to PUCCH resources according to Aspect 2-1-a;

FIG. 7 is a diagram to show an example of a configuration of PUCCH spatial relation information indication MAC CEs according to Aspect 2-1-a;

FIG. 8A and FIG. 8B are diagrams to show an example of numbers related to PUCCH resources according to Aspect 2-1-b;

FIG. 9 is a diagram to show an example of a UCI transmission method according to Aspect 2-2;

FIG. 10 is a diagram to show an example of a schematic structure of a radio communication system according to one embodiment;

FIG. 11 is a diagram to show an example of an overall structure of a base station according to one embodiment;

FIG. 12 is a diagram to show an example of a functional structure of the base station according to one embodiment;

FIG. 13 is a diagram to show an example of an overall structure of a user terminal according to one embodiment;

FIG. 14 is a diagram to show an example of a functional structure of the user terminal according to one embodiment; and

FIG. 15 is a diagram to show an example of a hardware structure of the base station and the user terminal according to one embodiment.

## Description of Embodiments

For a UE, parameters (PUCCH configuration information, PUCCH-Config) required for PUCCH transmission may be configured through higher layer signaling. The PUCCH configuration information may include a list of PUCCH resource set information (for example, PUCCH-ResourceSet) and a list of PUCCH spatial relation information (for example, PUCCH-SpatialRelationInfo).

The higher layer signaling may be, for example, any one or combinations of RRC (Radio Resource Control) signaling, MAC (Medium Access Control) signaling, broadcast information, and the like.

For example, the MAC signaling may use MAC control elements (MAC CE), MAC PDUs (Protocol Data Units), and the like. For example, the broadcast information may be master information blocks (MIBs), system information blocks (SIBs), minimum system information (RMSI (Remaining Minimum System Information)), other system information (OSI), and the like.

The PUCCH resource set information may include a list (for example, resourceList) of PUCCH resource indices (IDs, for example, PUCCH-ResourceId).

In a case that the UE has no individual PUCCH resource configuration information provided by the PUCCH resource set information in the PUCCH configuration information (before RRC setup), the UE determines a PUCCH resource set based on higher layer parameters in system information (System Information Block Type1: SIB1, RMSI).

The UE determines the PUCCH resource index $r_{PUCCH}$ by using the equation below based on a PUCCH resource indicator field $\Delta_{PRI}$ in DCI format 1_0 or 1_1, a CCE number $N_{CCE, 0}$ in a control resource set (CORESET) for reception of a PDCCH carrying the DCI, and an index $n_{CCE, 0}$ for a leading (first) CCE for reception of the PDCCH.

[Math. 1]

$$(\text{Equation } 1)$$

$$r_{PUCCH} = \left\lfloor \frac{2 \cdot n_{CCE,0}}{N_{CCE,0}} \right\rfloor + 2 \cdot \Delta_{PRI}$$

On the other hand, in a case that the UE has individual PUCCH resource configuration information (after RRC setup), the UE determines a PUCCH resource set index in accordance with the number of UCI information bits.

In a case that eight PUCCH resources are present in the determined PUCCH resource set, the UE determines the PUCCH resource index in accordance with the PUCCH resource indicator field in DCI format 1_0 or 1_1.

In a case that more than eight PUCCH resources are present in the first PUCCH resource set (UCI), the UE determines the PUCCH resource index by using the equation below based on the PUCCH resource indicator field $\Delta_{PRI}$ in DCI format 1_0 or 1_1, the number $N_{CCE, p}$ of CCEs in a CORESET p for reception of a PDCCH carrying the DCI, and an index $n_{CCE, p}$ for a leading CCE for reception of the PDCCH.

[Math. 2]

(Equation 2)

$$r_{\text{PUCCH}} = \begin{cases} \left\lfloor \dfrac{n_{\text{CCE},p} \cdot \left\lceil R_{\text{PUCCH}}/8 \right\rceil}{N_{\text{CCE},p}} \right\rfloor + \Delta_{\text{PRI}} \cdot \left\lceil \dfrac{R_{\text{PUCCH}}}{8} \right\rceil & \text{if} \quad \Delta_{\text{PRI}} < R_{\text{PUCCH}} \bmod 8 \\[3ex] \left\lfloor \dfrac{n_{\text{CCE},p} \cdot \left\lfloor R_{\text{PUCCH}}/8 \right\rfloor}{N_{\text{CCE},p}} \right\rfloor + \Delta_{\text{PRI}} \cdot \left\lfloor \dfrac{R_{\text{PUCCH}}}{8} \right\rfloor + R_{\text{PUCCH}} \bmod 8 & \text{if} \quad \Delta_{\text{PRI}} \geq R_{\text{PUCCH}} \bmod 8 \end{cases}$$

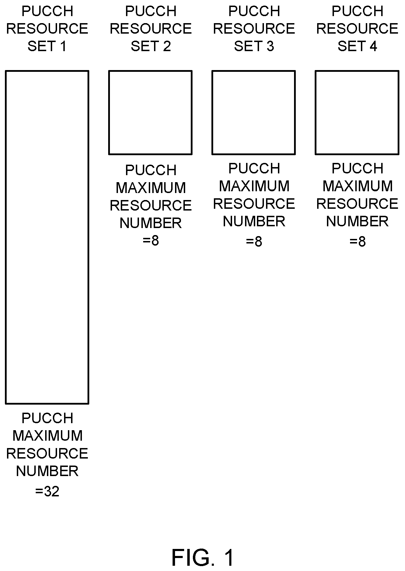

As shown in FIG. 1, for the PUCCH resource set information, the maximum number (for example, maxNrof-PUCCH-ResourceSets) of PUCCH resource sets in each PUCCH resource set group may be 4.
The maximum number (for example, maxNrofPUCCH-ResourcesPerSet) of PUCCH resources in each PUCCH resource set may be 32. The maximum number (for example, maxNrofPUCCH-Resources) of all PUCCH resources may be 128.

The PUCCH spatial relation information may indicate a plurality of candidate beams (spatial domain filters) for PUCCH transmission. The PUCCH spatial relation information may indicate a spatial association between an RS (Reference Signal) and a PUCCH.

The list of PUCCH spatial relation information includes at least one entry (PUCCH spatial relation information, PUCCH spatial relation IE (Information Element). Each piece of PUCCH spatial relation information may include a PUCCH spatial relation information index (ID, for example, pucch-SpatialRelationInfoId), a serving cell index (ID, for example, servingCellId), and an RS index. The RS index may be one of an SSB (SS (Synchronization Signal) block, SS/PBCH (Physical Broadcast CHannel) block) index, an NZP (Non-Zero Power)-CSI-RS resource configuration ID, and an SRS resource configuration ID. The SSB index, the NZP-CSI-RS resource configuration ID, and the SRS resource configuration ID may be associated with at least one of the beam, resource, and port selected based on measurement of a corresponding RS.

At least one of a plurality of pieces of PUCCH spatial relation information (for example, PUCCH-SpatialRelationInfo or candidate beam) in the list of the PUCCH spatial relation information may be indicated by MAC (Medium Access Control) CE (Control Element).

The UE may receive a MAC CE that activates or deactivates the PUCCH spatial relation information (PUCCH spatial relation information activation/deactivation MAC CE, PUCCH spatial relation information indicator MAC CE).

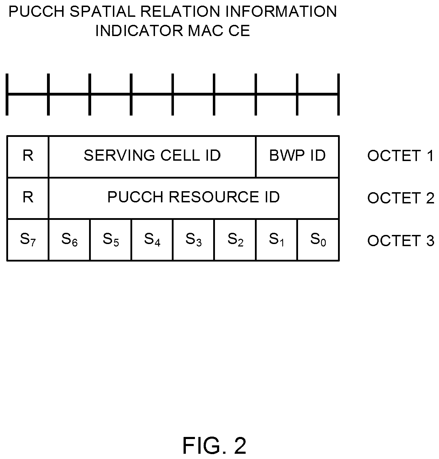

As shown in FIG. 2, the PUCCH spatial relation information indicator MAC CE may include at least one of an R (Reserved) field, a saving cell ID (index), a BWP ID (index), a PUCCH resource ID (index) field, and an $S_i$ field.

The PUCCH resource ID field is an identifier of a PUCCH resource ID (PUCCH-ResourceId) notified through higher layer signaling.

In a case that the Si field is set to 1, PUCCH spatial relation information with an PUCCH spatial relation information index i is activated. In a case that the Si field is set to 0, the PUCCH spatial relation information with the PUCCH spatial relation information index i is deactivated. In other words, the $S_i$ field indicates whether to activate the corresponding PUCCH spatial relation information.

For one PUCCH resource, one piece of PUCCH spatial relation information may exclusively be active at a time.

For future radio communication systems (for example, Rel. 16 and subsequent releases), a study is conducted about non-coherent DL (for example, PDSCH) transmission from each of a plurality of transmission points. Cooperative transmission of non-coherent DL signals (or DL channel) from a plurality of transmission points may be referred to as NCJT (Non-Coherent Joint Transmission, joint transmission).

In the present disclosure, the transmission points may be replaced with transmission/reception points (TRPs), panels (antenna panels, a plurality of antenna elements), antenna ports, or cells. The transmission points (TRPs, panels, and so on) may be replaced with, for example, beams, spatial filters, reference signal (RS) resources, quasi co-location (QCL), transmission configuration information (TCI), spatial domain filters, spatial resources, or a concept obtained by grouping these.

It is also assumed that scheduling of non-coherent PDSCHs transmitted from a respective plurality of transmission points are controlled by using one or more pieces of DCI (Downlink Control Information). As an example, at least one of a plurality of downlink control channels (for example, PDCCHs) and DCI is employed to schedule the PDSCHs transmitted from the plurality of transmission points.

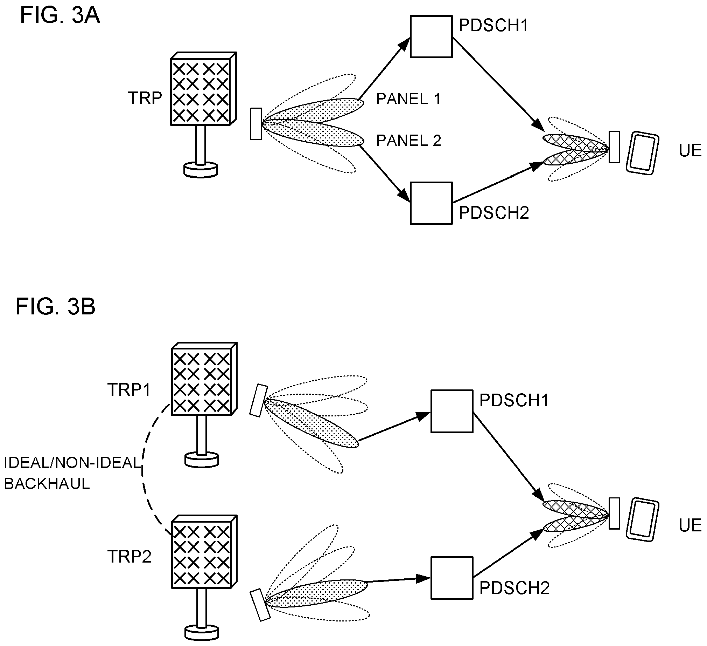

FIG. 3A shows a case that PDSCHs 1 and 2 (for example, PDSCHs employing NCJT) are transmitted from panels 1 and 2, respectively. FIG. 3B shows a case that the PDSCHs 1 and 2 (for example, PDSCHs employing NCJT) are transmitted from a plurality of transmission and/or reception points (TRPs 1 and 2). The PDSCHs 1 and 2 may include the same data or different data.

A plurality of transmission points may be connected via a wired or wireless interface (ideal or non-ideal backhaul).

For such NCJT, the following assumptions 1 and 2 are studied.

<Assumption 1>

In assumption 1, one piece of DCI is used to schedule a plurality of PDSCHs.

<Assumption 2>

In assumption 2, a plurality of pieces of DCI are used to schedule a respective plurality of PDSCHs.

In such a case, for the UE, how UCI is transmitted for the plurality of PDSCHs has not been determined. For example, the following have not been determined: to which of the transmission points the UE makes transmission, the content of UCI, a transmission timing for UCI, PUCCH configuration information, and determination of PUCCH resources.

Thus, the inventors of the present invention came up with the idea of a method for determining a resource (for example, at least one of a PUCCH resource and PUCCH spatial relation information) for transmission of at least one uplink control channel based on a plurality of DL signals.

Embodiments according to the present disclosure will be described in detail with reference to the drawings as follows. The radio communication method according to each embodiment (aspect) may be employed independently or may be employed in combination.

The transmission points and TRPs used herein may be replaced with panels. In other words, TRP #1 and TRP #2 may be different panels #1 and #2.

For the UE, one of a plurality of UCI feedback modes may be explicitly or implicitly configured through higher layer signaling. The plurality of UCI feedback modes may include at least one of the operations illustrated below in Aspects 1-1, 1-2, 2-1, and 2-2.

A case where the UCI includes the HARQ-ACK for the PDSCH will hereinafter mostly be described. Even in a case that instead of the UCI, another information is used, the present invention can be employed. For example, the UCI may include CSI based on another downlink channel or downlink signal (for example, RS). The PDSCH may hereinafter be replaced with a downlink channel or downlink signal such as downlink data, the PDCCH (DCI), or RS (for example, an SS/PBCH block or CSI-RS).

For assumption 1 described above, one piece of DCI may include one or more PUCCH resource indicator fields or one or more HARQ feedback timing indicator (PDSCH-to-HARQ_feedback timing indicator) fields.

For assumption 2 described above, a plurality of CORESETs for a plurality of pieces of DCI may be configured for the UE. Each piece of DCI may include one PUCCH resource indicator field or one HARQ feedback timing indicator field.

<Aspect 1>

The UE may transmit one piece of UCI for a plurality of (N) transmission points by using one PUCCH resource. N may be 2 or more than 2. Each piece of UCI may be based on a plurality of PDSCHs.

The UE may generate one piece of UCI including a plurality of pieces of information (for example, HARQ-ACK) based on a respective plurality of PDSCHs, or may generate one piece of UCI including information common to a plurality of pieces of information, and information varying among a plurality of pieces of information.

The UE may determine one PUCCH resource to determine one piece of PUCCH spatial relation information (beam and spatial domain filter). The UE may receive PUCCH spatial relation information indicator MAC CEs. The UE may transmit one piece of UCI by using one PUCCH resource and one piece of PUCCH spatial relation information.

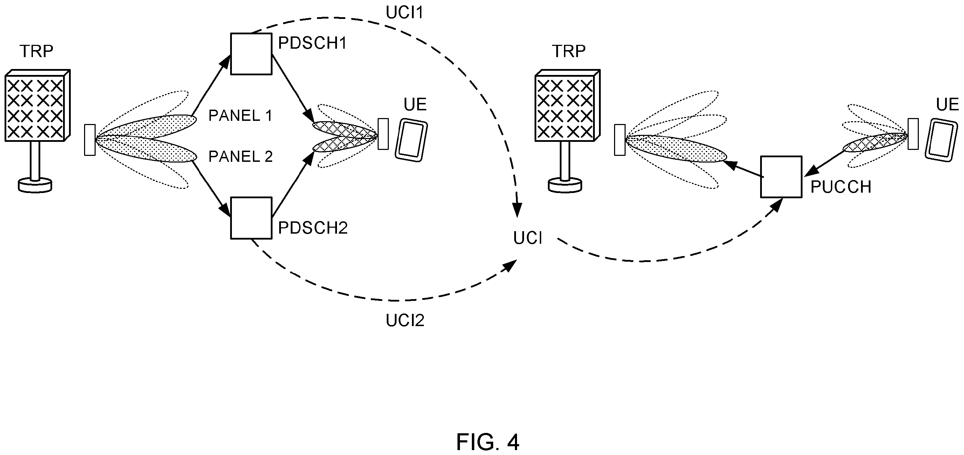

FIG. 4 is a diagram to show an example of a UCI transmission method according to Aspect 1.

In this example, two panels of one TRP transmits respective two PDSCHs (N=2). The UE receives PDSCH 1 transmitted from panel 1 and PDSCH 2 transmitted from panel 2. PDSCHs 1 and 2 may be transmitted by using different base station transmission beams. The UE generates one piece of UCI including UCI 1 based on PDSCH 1 (for example, HARQ-ACK) and UCI 2 based on PDSCH 1 (for example, HARQ-ACK).

The UE determines one PUCCH resource and one piece of PUCCH spatial relation information and transmits one piece of UCI that is generated, by using one PUCCH resource and one piece of PUCCH spatial relation information that are determined. In other words, the UCI is transmitted to one of panels 1 and 2.

The UE may determine one PUCCH resource in accordance with one of Aspects 1-1 and 1-2 described below.

(Aspect 1-1)

In a case that, for assumption 1, the DCI includes a plurality of PUCCH resource indicator fields, the UE determines one PUCCH resource index based on a leading PUCCH resource indicator field in DCI format 1_0 or 1_1, the number of CCEs in a CORESET for reception of a PDCCH carrying the DCI, and an index for a leading CCE for reception of the PDCCH.

(Aspect 1-2)

In a case that, for assumption 2, a plurality of pieces of DCI are transmitted within a respective plurality of CORESETs, the UE determines one PUCCH resource index based on the PUCCH resource indicator field in the DCI in a particular CORESET of the plurality of CORESETs, the number of CCEs in the particular CORESET, and the index for the leading CCE for reception of the PDCCH carrying the DCI.

The particular CORESET may be a CORESET with the minimum CORESET ID or a CORESET with the minimum TCI state (TCI_state) ID or a CORESET associated with the minimum value of one of a panel ID, a TRP ID, a PDSCH ID, a codeword (CW) ID, and a DMRS port group ID.

According to Aspect 1, the UE transmits one piece of UCI for a plurality of PDSCHs by using one PUCCH resource, and thus processing loads on the UE are reduced, enabling an increase in use efficiency of resources.

<Aspect 2>

The UE may report a plurality of pieces of UCI by using a plurality of PUCCH resources and a plurality of pieces of PUCCH spatial relation information (beam and spatial domain filter). The plurality of pieces of UCI (for example, HARQ-ACKs) may be based on a respective plurality of PDSCHs. The plurality of pieces of UCI may be the same UCI. The same UCI may include a plurality of pieces of UCI (for example, HARQ-ACKs) based on a respective plurality of PDSCHs.

The UE may determine a plurality of PUCCH resources in accordance with one of Aspects 2-1 and 2-2 described below.

(Aspect 2-1)

The UE may report a plurality of pieces of UCI by using a plurality of PUCCH resources and a plurality of pieces of PUCCH spatial relation information. The plurality of (N) pieces of UCI may be based on a respective plurality of (N) PDSCHs (transmission points). N may be 2 or more than 2.

The N PUCCH resources may correspond to the respective N PDSCHs. The N pieces of PUCCH spatial relation information may correspond to the respective N PDSCHs.

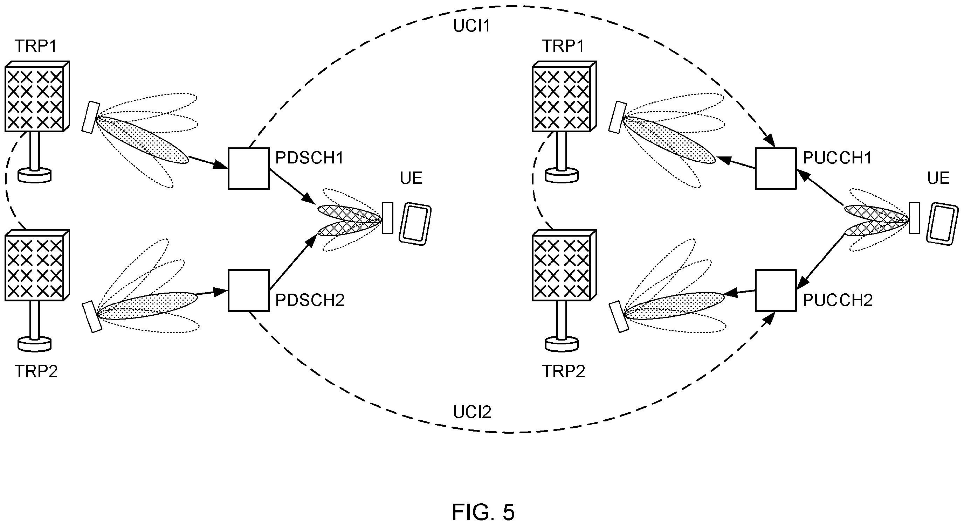

FIG. 5 is a diagram to show an example of a UCI transmission method according to Aspect 2-1.

In this example, two PDSCHs are transmitted from respective two TRPs (N=2). The UE receives PDSCH 1 transmitted from TRP 1 and PDSCH 2 transmitted from TRP 2. The UE generates UCI 1 based on PDSCH 1 (for example, HARQ-ACK) and UCI 2 based on PDSCH 1 (for example, HARQ-ACK). The UE determines PUCCH resource 1 and PUCCH spatial relation information 1 corresponding to PDSCH 1 and determines PUCCH resource 2 and PUCCH spatial relation information 2 corresponding to PDSCH 2.

The UE transmits UCI 1 by using PUCCH resource 1 and PUCCH spatial relation information 1. In other words, the UE transmits UCI 1 to TRP 1. The UE transmits UCI 2 by using PUCCH resource 2 and PUCCH spatial relation information 2. In other words, the UE transmits UCI 2 to TRP 2.

For the UE, a group of PUCCH resource sets (PUCCH resource set group) may be configured. For example, in a case that the UE determines one PUCCH resource set from four PUCCH resource sets based on a UCI payload size, each PUCCH resource set group may include four PUCCH resource sets.

For the UE, a plurality of (N) PUCCH resource set groups may be configured. Each PUCCH resource set group may be associated with at least one of the transmission point, the DL panel, the TRP, the PDSCH, a codeword, and a DMRS port group.

In a case that N is 1 and a plurality of PUCCH resource set groups are configured for the UE, the UE may determine a PUCCH resource group set from a particular PUCCH resource set group (for example, a leading PUCCH resource set group).

For UCI for PDSCHs from different transmission points, in a case that the UE has individual PUCCH resource configuration information, the UE may determine a PUCCH resource set index based on the number of UCI information bits for each transmission point.

The PUCCH resource set indices determined for the respective PDSCHs may be the same or different from one another.

The UE may determine the PUCCH resource index based on the PUCCH resource indicator field in the DCI for scheduling of each PDSCH, the number of CCEs in the CORESET for reception of the PDCCH carrying the DCI, and the index for the leading CCE for reception of the PDCCH.

Furthermore, the UE may be configured with a group of pieces of PUCCH spatial relation information (PUCCH spatial relation information group) for each PUCCH resource set group. Each PUCCH spatial relation information group for one UE may be associated with at least one of an UL panel, an SRS, and an SRS port group.

The UE may determine numbers related to the PUCCH resource in accordance with one of Aspects 2-1-a and 2-1-b described below.

<<Aspect 2-1-a>>

At least one of the maximum number of PUCCH resource sets in each PUCCH resource set group, the maximum number of PUCCH resource sets in each PUCCH resource set, and the maximum number of all PUCCH resources may be a value provided by the individual PUCCH resource configuration information (maxNrofPUCCH-ResourceSets, maxNrofPUCCH-ResourcesPerSet, or maxNrofPUCCH-Resources). maxNrofPUCCH-Resources may be the maximum number of all PUCCH resources in all PUCCH resource set groups or the maximum number of all PUCCH resources in each PUCCH resource set group.

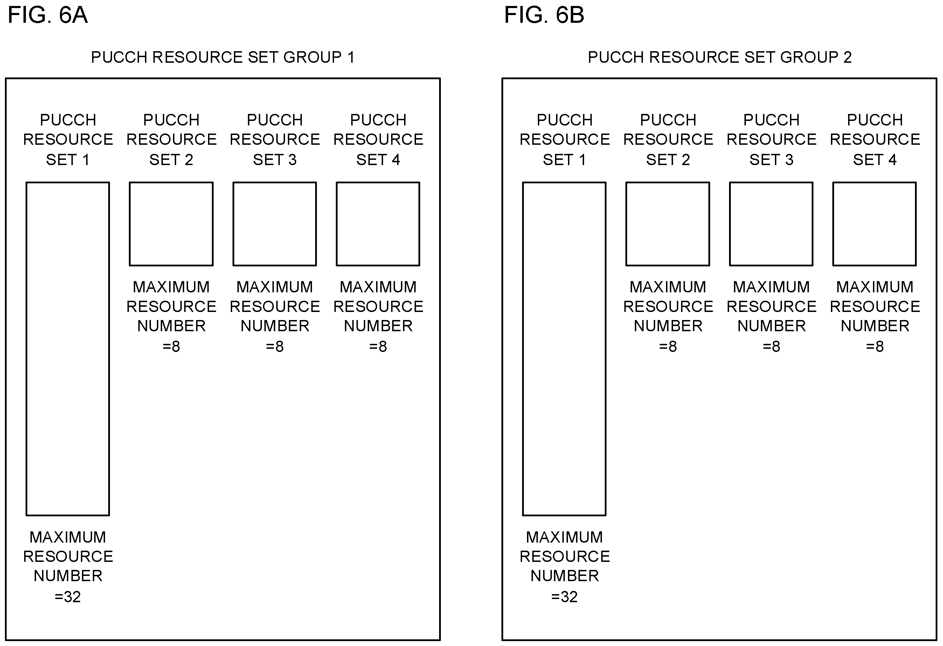

For N of 2 as shown in FIG. 6A (PUCCH resource set group 1) and FIG. 6B (PUCCH resource set group 2), maxNrofPUCCH-ResourceSets, maxNrofPUCCH-ResopurcesPerSet, or maxNrofPUCCH-Resources may be applied to each of PUCCH resource set groups 1 and 2. For example, maxNrofPUCCH-ResourceSets may be 4. For example, maxNrofPUCCH-ResourcesPerSet may be 32. For example, maxNrofPUCCH-Resources may be 128.

A PUCCH resource set with a PUCCH resource set index (pucch-ResourceSetId) of 0 (that may also be referred to as a leading PUCCH resource set or PUCCH resource set 1) may include PUCCH resources 1 to 32. A PUCCH resource set with a PUCCH resource set index of larger than 0 (that may also be referred to as a PUCCH resource set other than the leading PUCCH resource set or PUCCH resource set 2 or a subsequent PUCCH resource set) may include PUCCH resources 1 to 8.

The maximum number of all PUCCH resources may increase consistently with the number N of PUCCH resource set groups (for example, $128 \times N$).

In this case, the existing PUCCH spatial relation information indicator MAC CE can support only 128 PUCCH resources (7-bit PUCCH resource index (ID)), and thus the PUCCH spatial relation information indicator MAC CE may be expanded.

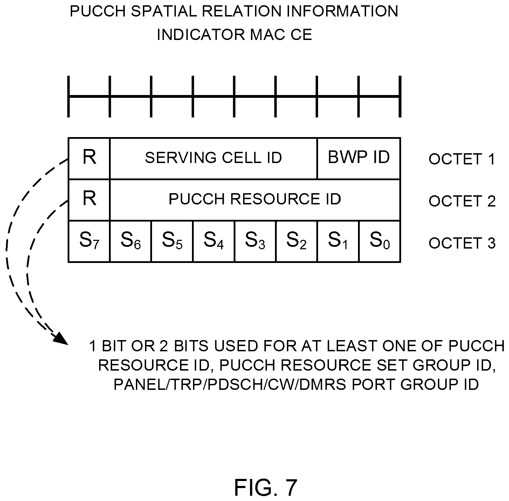

As shown in FIG. 7, in the PUCCH spatial relation information indicator MAC CE, a 1- or 2-bit R (Reserved) field may be used to indicate an index identifying at least one of the PUCCH resource set group, panel, TRP, PDSCH, codeword, and DMRS port group. For example, in a case that a 1-bit R field is used, one of two PUCCH resource set groups can be indicated. In a case that a 2-bit R field is used, one of four PUCCH resource set groups can be indicated.

The 1- or 2-bit R field may be used to expand the PUCCH resource index. The use of the 1-bit R field enables 8 bits (known 7-bit PUCCH resource index field + 1-bit R field) to be used, allowing one of 256 PUCCH resource indices to be indicated. The use of the 2-bit R field enables 9 bits (known 7-bit PUCCH resource index field + 2-bit R field) to be used, allowing one of 512 PUCCH resource indices to be indicated.

<<Aspect 2-1-b>>

The maximum number of PUCCH resources in each PUCCH resource set may be reduced by using N. For example, the maximum number of PUCCH resources in each PUCCH resource set may be maxNrofPUCCH-Resource-Sets/N.

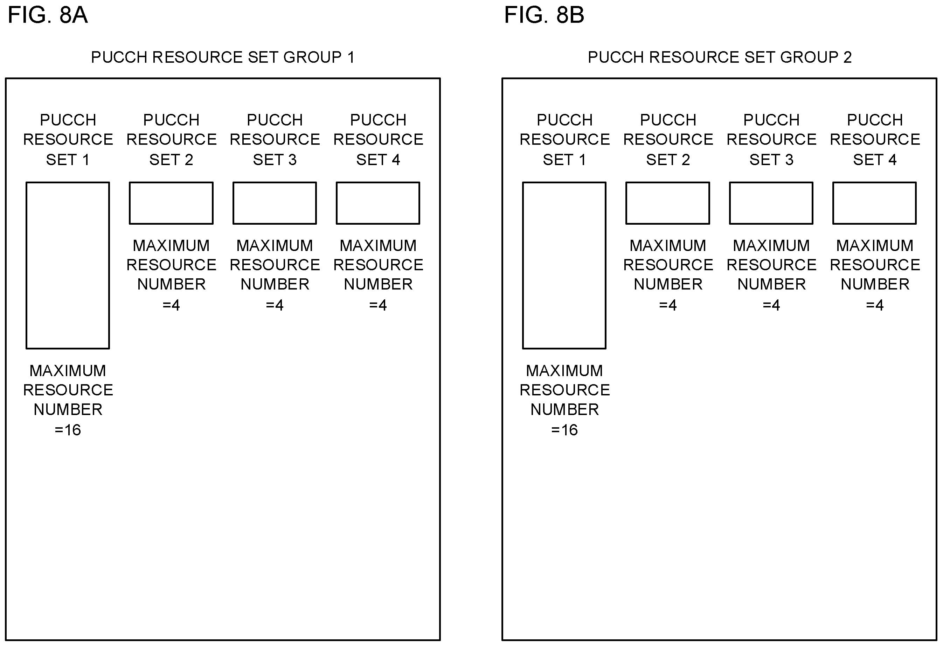

For N of 2, as shown in FIG. 8A (PUCCH resource set group 1) and FIG. 8B (PUCCH resource set group 2), the maximum number of PUCCH resource sets in each PUCCH resource set group, the maximum number of PUCCH resources in each PUCCH resource set, and the maximum number of all PUCCH resources may be 1/2 of the respective maximum numbers in the example in FIG. 6A and FIG. 6B.

In this case, the PUCCH resource indicator field in DCI format 1_0 or 1_1 may be reduced from 3 bits to 2 bits.

In a case that the number of PUCCH resources (the size $R_{PUCCH}$ of the higher layer parameter resourceList) in the leading PUCCH resource set in the individual PUCCH resource configuration information is larger than 4, the UE may use Equation 2 described above to determine the PUCCH resource index.

The actual number of PUCCH resources per PUCCH resource set may be configured through higher layer signaling. A threshold (that is, $N_2$ or $N_3$) for a UCI payload size for determination of the PUCCH resource set may be configured through higher layer signaling.

The UE may determine at least one particular parameter of the number of PUCCH resources per PUCCH resource set and the threshold for the UCI payload size in accordance with one of Aspects 2-1-c and 2-1-d described below.

<<Aspect 2-1-c>>

For the UE, separate particular parameters may be configured for the respective PUCCH resource set groups through higher layer signaling.

<<Aspect 2-1-d>>

For the UE, one parameter (for example, P) may be configured for a plurality of PUCCH resource set groups through higher layer signaling.

P may indicate the total of particular parameters for a plurality of PUCCH resource set groups. For example, the UE may assume that a particular parameter is P/N for each PUCCH resource set group. For example, for N of 2, the UE may assume that the particular parameter is P/2.

P may indicate the total of particular parameters for a particular PUCCH resource set group.

The UE may assume that the particular parameter for PUCCH resource set groups (non-particular PUCCH resource set groups) corresponding to the plurality of PUCCH resource set groups other than the particular PUCCH resource set groups is equal to P.

The UE may use a certain function to derive the particular parameter for the non-particular PUCCH resource set group.

Now, a case will be described in which the maximum number of PUCCH resources per PUCCH resource set is M, N is 2, and P is configured as the particular parameter for the particular PUCCH resource set group.

In a case that the particular parameter is the number of PUCCH resources per PUCCH resource set, the UE may derive the particular parameter for the non-particular PUCCH resource set group by using Min (P, M-P) or Min (P, $2\times M$).

In a case that the particular parameter is the threshold for the UCI payload size, the UE may use Min (P, $2\times M$) to derive the particular parameter for the non-particular PUCCH resource set groups.

According to Aspect 2-1, the UCI is transmitted by using the PUCCH resource and PUCCH spatial relation information corresponding to each transmission point, thus allowing the reception quality of the PUCCH to be improved. The payload size of the UCI can be reduced, enabling an increase in the use efficiency of resources.

(Aspect 2-2)

The UE may repeatedly report one piece of UCI by using at least one PUCCH resource and a plurality of pieces of PUCCH spatial relation information (repeated transmission, repetition). Each piece of the UCI may be based on a plurality of (N) PDSCHs.

The UE may generate one piece of UCI including a plurality of pieces of information (for example, HARQ-ACK) based on a respective plurality of PDSCHs, or may generate one piece of UCI including information common to a plurality of pieces of information, and information varying among a plurality of pieces of information.

In a case that a plurality of PUCCH resource set groups are configured for the UE, the UE may determine a PUCCH resource group set from a particular PUCCH resource set group (for example, a leading PUCCH resource set group) included in the plurality of PUCCH resource set groups.

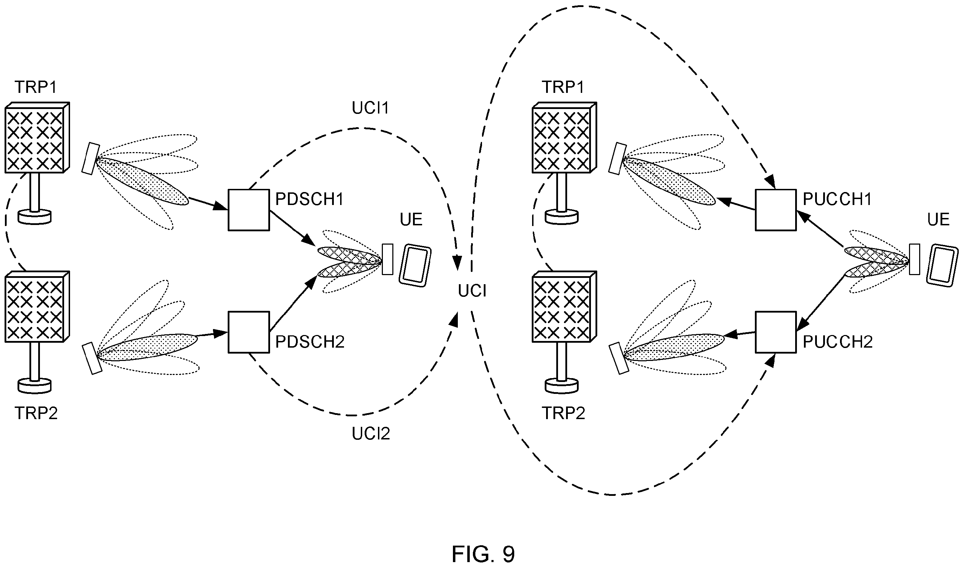

FIG. 9 is a diagram to show an example of a UCI transmission method according to Aspect 2-2.

In this example, two PDSCHs are transmitted from respective two TRPs (N=2). The UE receives PDSCH 1 transmitted from TRP 1 and PDSCH 2 transmitted from TRP 2. The UE generates one piece of UCI based on UCI 1 based on PDSCH 1 (for example, HARQ-ACK) and UCI 2 based on PDSCH 1 (for example, HARQ-ACK). The UE determines PUCCH spatial relation information 1 corresponding to PDSCH 1 and determines PUCCH spatial relation information 2 corresponding to PDSCH 2. The UE transmits the same UCI in PUCCH 1 using PUCCH spatial relation information 1 and in PUCCH 2 using PUCCH spatial relation information 2.

The UE may determine the PUCCH resource and PUCCH spatial relation information in accordance with one of Aspects 2-2-a and 2-2-b described below.

<<Aspect 2-2-a>>

The UE may repeatedly transmit one piece of UCI by using one PUCCH resource and a plurality of pieces of PUCCH spatial relation information corresponding to a respective plurality of PDSCHs.

The UE may determine one PUCCH resource set and one PUCCH resource.

The UE may transmit the same UCI by using the one PUCCH resource determined and the plurality of different pieces of PUCCH spatial relation information (beam and spatial domain filter).

The PUCCH spatial relation information indicator MAC CE may activate N pieces of PUCCH spatial relation information at a time for one PUCCH resource. The N pieces of PUCCH spatial relation information may be associated with N PDSCHs (transmission points). The UE may transmit the same UCI by using each of the N pieces of PUCCH spatial relation information activated.

The PUCCH spatial relation information indicator MAC CE may include one PUCCH resource index and N sets of $S_i$ fields. Each set of $S_i$ fields may include M bits. M may be 8 or any other number. The N sets of $S_i$ fields may be

associated with respective N PDSCHs (transmission points). For each set of $S_i$ fields, one Si field corresponding to the PUCCH spatial relation information activated may exclusively be set to 1.

The PUCCH spatial relation information indicator MAC CE may include one PUCCH resource index and N PUCCH spatial relation information indices (for example, i). The N PUCCH spatial relation information indices may be associated with respective N PDSCHs (transmission points). Each PUCCH spatial relation information index indicates an index for the PUCCH spatial relation information activated. One PUCCH spatial relation information index may include L bits. For example, in a case that the PUCCH spatial relation information index indicates one of eight pieces of PUCCH spatial relation information, the PUCCH spatial relation information index may have a size L of 3 bits. L may be any other number.

The PUCCH spatial relation information indicator MAC CE may include one set of $S_i$ fields. One set of $S_i$ fields may include M bits. M may be 8 or any other number. For N of 2, for the PUCCH spatial relation information indicator MAC CE, two $S_i$ fields may be set to 1. For N of 2 and M of 8, each set of 4 bits of an 8-bit $S_i$ field may be associated with one transmission point. In this case, one of $S_0$ to $S_3$ may be set to 1 to indicate the PUCCH spatial relation information corresponding to the first transmission point, and one of $S_4$ to $S_7$ may be set to 1 to indicate the PUCCH spatial relation information corresponding to the second transmission point.

<<Aspect 2-2-b>>

The UE may repeatedly transmit one piece of UCI by using a plurality of PUCCH resources corresponding to a respective plurality of PDSCHs and a plurality of pieces of PUCCH spatial relation information corresponding to the respective plurality of PDSCHs.

The UE may determine one PUCCH resource set and may determine a plurality of PUCCH resources from the PUCCH resource set.

The UE may determine one PUCCH resource set index based on the number of one UCI information bit. To transmit one piece of UCI for a plurality of PDSCHs, the UE may determine the same PUCCH resource set index for a plurality of PDSCHs.

The UE may determine a PUCCH resource index for each PDSCH from the PUCCH resource set determined, as in the case of Aspect 2-1. Specifically, the UE may determine the PUCCH resource index based on the PUCCH resource indicator field in the DCI for scheduling of each PDSCH, the number of CCEs in the CORESET for reception of the PDCCH carrying the DCI, and the index for the leading CCE for reception of the PDCCH.

The UE may determine different pieces of PUCCH spatial relation information for the respective PUCCH resource indices. The UE may determine the PUCCH spatial relation information corresponding to each PUCCH resource index by receiving the PUCCH spatial relation information indicator MAC CE corresponding to each PUCCH resource index. The UE may transmit the same UCI by using the plurality of PUCCH resources determined and the corresponding PUCCH spatial relation information (beam and spatial domain filter).

According to Aspect 2-2, the same UCI is repeatedly transmitted by using different pieces of PUCCH spatial relation information, thus allowing reliablity to be improved.

<Aspect 3>

In Aspect 2, the UE may use a plurality of PUCCH resources with different time resources to transmit a respective plurality of pieces of UCI.

In assumption 1, in a case that one piece of DCI includes a plurality of HARQ feedback timing indicator fields, the UE may determine a feedback timing for the corresponding UCI based on each of the HARQ feedback timing indicator fields.

In assumption 1, in a case that one piece of DCI includes only one HARQ feedback timing indicator field, the UE may determine a feedback timing on the first PUCCH resource in accordance with the HARQ feedback timing indicator field, and determine feedback timings on the second and subsequent PUCCH resources to be a timing a certain time after the preceding feedback timing. For example, the certain time may be X symbols or X slots. X may be defined in specifications or configured through higher layer signaling.

In assumption 2, the UE may receive a plurality of pieces of DCI for scheduling of a plurality of PDSCHs and in accordance with the HARQ feedback timing indicator field in each piece of DCI, determine a feedback timing for the corresponding UCI.

According to Aspect 3, the UE transmits a plurality of pieces of UCI by using different time resources, allowing reliability to be improved.

<Aspect 4>

In Aspect 2, the UE may use a plurality of PUCCH resources with the same time resource to transmit a respective plurality of pieces of UCI.

In assumption 1, in a case that one piece of DCI includes only one HARQ feedback timing indicator field, the UE may determine, in accordance with the HARQ feedback timing indicator field in the DCI, feedback timings for a plurality of pieces of UCI.

In assumption 1, in a case that one piece of DCI includes a plurality of HARQ feedback timing indicator fields, the UE may determine, in accordance with the first HARQ feedback timing indicator field in the DCI, feedback timings for a plurality of pieces of UCI.

In assumption 2, the UE receives a plurality of pieces of DCI for scheduling of a plurality of PDSCHs. In this case, the UE may expect that the HARQ feedback timing indicator fields in a plurality of pieces of DCI do not exhibit different values.

In assumption 2, in a case that the HARQ feedback timing indicator fields in a plurality of pieces of DCI indicate different values, the UE may determine, in accordance with the HARQ feedback timing indicator field in a piece of DCI included in the plurality of pieces of DCI and located in a particular CORESET, feedback timings for the plurality of pieces of UCI. The particular CORESET may be a CORESET with the minimum CORESET ID or a CORESET with the minimum TCI state ID or a CORESET associated with the minimum value of one of the panel ID, TRP ID, PDSCH ID, codeword ID, and DMRS port group ID.

UE capability information may be defined that indicates support of simultaneous transmission of a plurality of UL channels (for example, PUCCHs) by using a respective plurality of pieces of UL spatial relation information (for example, PUCCH spatial relation information) (simultaneous transmission of a plurality of beams). The UE having reported UE capability information may simultaneously transmit a plurality of pieces of UCI by using a respective plurality of pieces of PUCCH spatial relation information.

In a case of having reported UE capability signaling indicating no support of simultaneous transmission using different pieces of PUCCH spatial relation information, the UE may expect that simultaneous transmission using a plurality of different pieces of PUCCH spatial relation information is not configured for the UE.

For the UE having reported the UE capability information, a transmission timing for a plurality of pieces of UCI that may be the same timing or different timings may be configured through higher layer signaling.

According to Aspect 4, the UE transmits a plurality of pieces of UCI for a plurality of PDSCHs by using one time resource, thus enabling an increase in use efficiency of resources.

<Aspect 5>

For the UE, UCI transmission corresponding to the reported UE capability information may be configured.

In a case of having reported UE capability signaling indicating support of simultaneous transmission using different pieces of PUCCH spatial relation information, the UCI feedback mode in Aspect 2-1 and the same feedback timing in Aspect 4 may be configured for the UE. In this case, the UE may determine a plurality of PUCCH resources and a plurality of pieces of PUCCH spatial relation information in accordance with Aspect 2-1 to determine one feedback timing in accordance with Aspect 4.

In a case of having reported UE capability signaling indicating support of simultaneous transmission using different pieces of PUCCH spatial relation information, the UCI feedback mode in Aspect 2-2 and the same feedback timing in Aspect 4 may be configured for the UE. In this case, the UE may determine a plurality of PUCCH resources and a plurality of pieces of PUCCH spatial relation information in accordance with Aspect 2-2 to determine one feedback timing in accordance with Aspect 4.

In a case of having reported UE capability signaling indicating no support of simultaneous transmission using different pieces of PUCCH spatial relation information, the UCI feedback mode in Aspect 1-1 may be configured for the UE. In this case, the UE may determine one PUCCH resource and one piece of PUCCH spatial relation information in accordance with Aspect 1-1.

In a case of having reported UE capability signaling indicating no support of simultaneous transmission using different pieces of PUCCH spatial relation information, the UCI feedback mode in Aspect 2-1 and the plurality of different feedback timings in Aspect 3 may be configured for the UE. In this case, the UE may determine a plurality of PUCCH resources and a plurality of pieces of PUCCH spatial relation information in accordance with Aspect 2-1 to determine a plurality of feedback timings in accordance with Aspect 3.

In a case of having reported UE capability signaling indicating no support of simultaneous transmission using different pieces of PUCCH spatial relation information, the UCI feedback mode in Aspect 2-2 and the plurality of different feedback timings in Aspect 3 may be configured for the UE. In this case, the UE may determine a plurality of PUCCH resources and a plurality of pieces of PUCCH spatial relation information in accordance with Aspect 2-2 to determine a plurality of feedback timings in accordance with Aspect 3.

According to Aspect 5, the UE can appropriately transmit UCI depending on the UE capability.

<Aspect 6>

The UE may determine the UCI transmission method in accordance with the UCI (type, trigger, and so on).

In a case that the UCI is of a particular UCI type, the UE may transmit one piece of UCI based on a plurality of transmission points by using one PUCCH resource. The particular UCI type may be CSI.

In a case that UCI is triggered by DCI, the UE may transmit the UCI in accordance with at least one of Aspects 1 to 5. In a case that the UCI includes an HARQ-ACK, the UE may transmit the UCI in accordance with at least one of Aspects 1 to 5.

In a case that the UCI is semi-statically triggered (triggered through higher layer signaling), the UE may transmit the UCI in accordance with a method different from the method for the UCI triggered by the DCI. For example, in a case that the UCI includes no HARQ-ACK, the UE may transmit the UCI in accordance with a method different from the method for the UCI including an HARQ-ACK. In this case, for example, the UE may determine at least one of the PUCCH resource and PUCCH spatial relation information based on higher layer signaling, and may determine at least one of the PUCCH resource and PUCCH spatial relation information based on a certain rule. For example, the UE may determine the PUCCH spatial relation information (transmission point of a transmission destination and beam) based on the minimum value of one of the TCI state ID, panel ID, TRP ID, PDSCH ID, codeword ID, and DMRS port group ID.

According to Aspect 6, the UE can appropriately transmit UCI by using a method depending on the UCI (type, trigger, and so on).

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

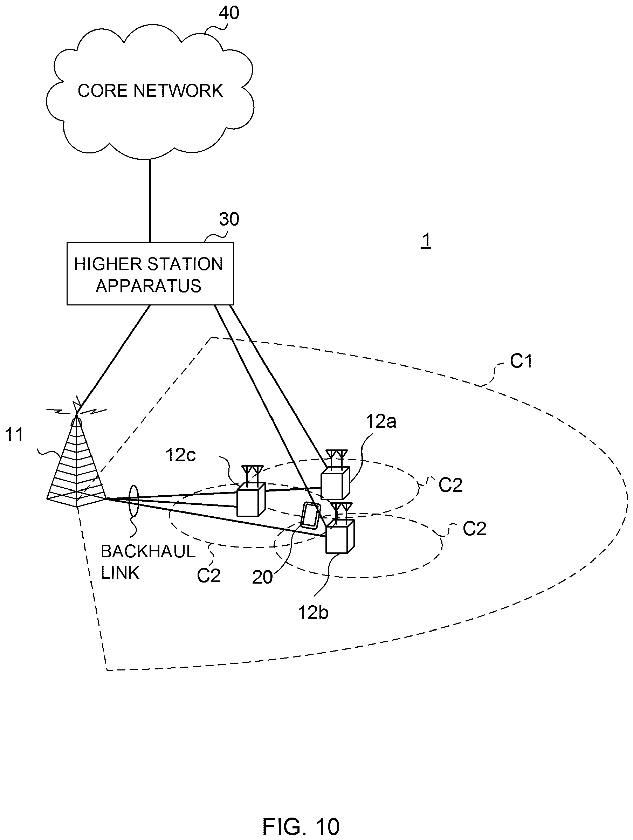

FIG. 10 is a diagram to show an example of a schematic structure of the radio communication system according to one embodiment. A radio communication system 1 can adopt at least one of carrier aggregation (CA) and dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a base station 11 that forms a macro cell C1 of a relatively wide coverage, and base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the base station 11 and the base stations 12. It is assumed that the user terminals 20 use the macro cell C1 and the small cells C2 at the same time by means of CA or DC. The user terminals 20 can execute CA or DC by using a plurality of cells (CCs).

The radio communication system 1 may support dual connectivity (multi-RAT dual connectivity (MR-DC)) between a plurality of RATs (Radio Access Technologies). The MR-DC may include dual connectivity (EN-DC (E-UTRA-NR Dual Connectivity)) between LTE (E-UTRA) and NR in which a base station (eNB) of LTE serves as a master node (MN) and a base station (gNB) of NR serves as a secondary node (SN), dual connectivity (NE-DC (NR-E-UTRA Dual Connectivity)) between NR and LTE in which a base station (gNB) of NR serves as an MN and a base station (eNB) of LTE (E-UTRA) serves as an SN, and so on. The radio communication system 1 may support dual connectivity between a plurality of base stations in the same RAT (for example, dual connectivity (NN-DC (NR-NR Dual Connectivity)) where both of an MN and an SN are base stations (gNB) of NR).

Between the user terminals 20 and the base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the base stations 12, a carrier of a relatively high frequency band (for example, 3.5 GHz, 5 GHz, and so on) and a wide bandwidth may be used, or the same carrier as that used between the user terminals 20 and the base station 11 may be used. Note that the structure of the frequency band for use in each base station is by no means limited to these.

The user terminals 20 can perform communication by using at least one of time division duplex (TDD) and frequency division duplex (FDD) in each cell. Furthermore, in each cell (carrier), a single numerology may be employed, or a plurality of different numerologies may be employed.

Numerologies may be communication parameters applied to at least one of transmission and reception of a certain signal or channel, and for example, may indicate at least one of a subcarrier spacing, a bandwidth, a symbol length, a cyclic prefix length, a subframe length, a TTI length, the number of symbols per TTI, a radio frame structure, a particular filter processing performed by a transceiver in a frequency domain, a particular windowing processing performed by a transceiver in a time domain, and so on.

For example, in a case that certain physical channels differ in at least one of the subcarrier spacing of the constituent OFDM symbols and the number of the OFDM symbols, it may be referred to as that the numerologies are different.

A wired connection (for example, an optical fiber in compliance with the CPRI (Common Public Radio Interface), an X2 interface, and so on) or a wireless connection may be established between the base station 11 and the base stations 12 (or between two base stations 12).

The base station 11 and the base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each base station 12 may be connected with the higher station apparatus 30 via the base station 11.

Note that the base station 11 is a base station having a relatively wide coverage, and may be referred to as a "macro base station," a "central node," an "eNB (eNodeB)," a "transmitting/receiving point" and so on. The base stations 12 are base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the base stations 11 and 12 will be collectively referred to as "base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and at least one of single carrier frequency division multiple access (SC-FDMA) and OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink control channels and so on, are used as downlink channels. User data, higher layer control information, SIBs (System Information Blocks) and so on are communicated on the PDSCH. The MIBs (Master Information Blocks) are communicated on the PBCH.

The downlink control channels include a PDCCH (Physical Downlink Control Channel), an EPDCCH (Enhanced Physical Downlink Control Channel), a PCFICH (Physical Control Format Indicator Channel), a PHICH (Physical Hybrid-ARQ Indicator Channel) and so on. Downlink control information (DCI), including scheduling information of at least one of PDSCH and PUSCH, and so on are communicated on the PDCCH.

Note that the DCI scheduling DL data reception may be referred to as "DL assignment," and the DCI scheduling UL data transmission may be referred to as "UL grant."

The number of OFDM symbols to use for the PDCCH may be communicated on the PCFICH. Transmission confirmation information (for example, also referred to as "retransmission control information," "HARQ-ACK," "ACK/NACK," and so on) of HARQ (Hybrid Automatic Repeat reQuest) to a PUSCH may be transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. In addition, radio quality information (CQI (Channel Quality Indicator)) of the downlink, transmission confirmation information, scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

(Base Station)

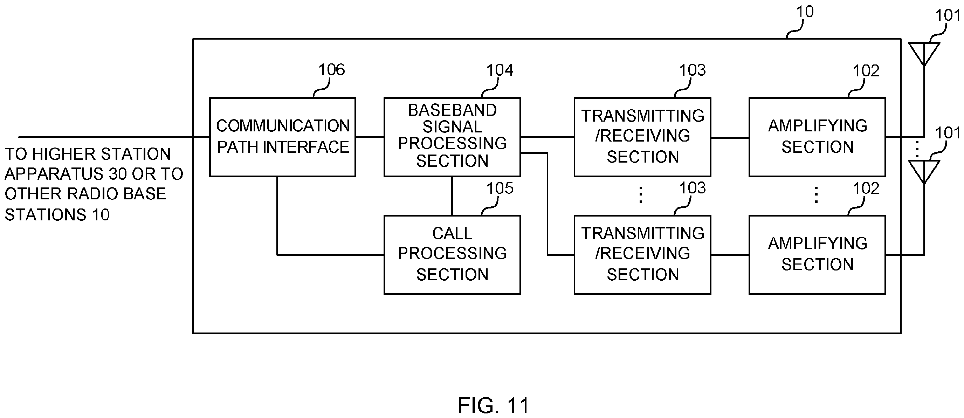

FIG. 11 is a diagram to show an example of an overall structure of the base station according to one embodiment. A base station 10 includes a plurality of transmitting/receiving antennas 101, amplifying sections 102, transmitting/receiving sections 103, a baseband signal processing section 104, a call processing section 105 and a communication path interface 106. Note that the base station 10 may be configured to include one or more transmitting/receiving antennas 101, one or more amplifying sections 102 and one or more transmitting/receiving sections 103.

User data to be transmitted from the base station 10 to the user terminal 20 by the downlink is input from the higher station apparatus 30 to the baseband signal processing section 104, via the communication path interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present disclosure pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (setting up, releasing and so on) for communication channels, manages the state of the base station 10, manages the radio resources and so on.

The communication path interface 106 transmits and/or receives signals to and/or from the higher station apparatus 30 via a certain interface. The communication path interface 106 may transmit and/or receive signals (backhaul signaling) with other base stations 10 via an inter-base station interface (for example, an optical fiber in compliance with the CPRI (Common Public Radio Interface) and an X2 interface).

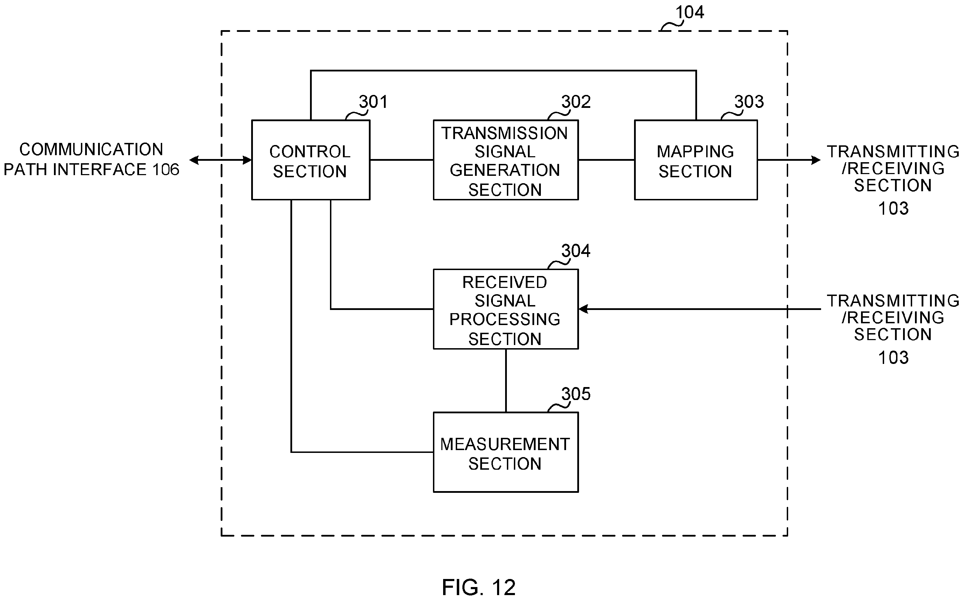

FIG. 12 is a diagram to show an example of a functional structure of the base station according to one embodiment. Note that, the present example primarily shows functional blocks that pertain to characteristic parts of the present embodiment, and it is assumed that the base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the base station 10, and some or all of the structures do not need to be included in the baseband signal processing section 104.

The control section (scheduler) 301 controls the whole of the base station 10. The control section 301 can be constituted with a controller, a control circuit or control apparatus that can be described based on general understanding of the technical field to which the present disclosure pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource assignment) of system information, a downlink data signal (for example, a signal transmitted by using a downlink shared channel), a downlink control signal (for example, a signal transmitted by using a downlink control channel). Based on the results of determining necessity or not of retransmission control to the uplink data signal, or the like, the control section 301 controls generation of a downlink control signal, a downlink data signal, and so on.

The control section 301 controls the scheduling of a synchronization signal (for example, PSS (Primary Synchronization Signal)/SSS (Secondary Synchronization Signal)), a downlink reference signal (for example, CRS, CSI-RS, DMRS), and so on.

The control section 301 controls the scheduling of an uplink data signal (for example, a signal transmitted by using an uplink shared signal), an uplink control signal (for example, a signal transmitted by using an uplink control channel), a random access preamble, an uplink reference signal, and so on.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present disclosure pertains.

The transmission signal generation section 302, for example, generates at least one of DL assignment to report assignment information of downlink data and UL grant to report assignment information of uplink data, based on commands from the control section 301. The DL assignment and the UL grant are both DCI, and follow the DCI format. For a downlink data signal, encoding processing and modulation processing are performed in accordance with a coding rate, modulation scheme, or the like determined based on channel state information (CSI) from each user terminal 20.

The mapping section 303 maps the downlink signals generated in the transmission signal generation section 302 to certain radio resources, based on commands from the control section 301, and outputs these to the transmitting/receiving sections 103. The mapping section 303 can be constituted with a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit or signal processing apparatus that can be described based on general understanding of the technical field to which the present disclosure pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs at least one of the received signal and the signal after the receiving process to the measurement section 305.

The measurement section 305 conducts measurements with respect to the received signals. The measurement section 305 can be constituted with a measurer, a measurement circuit or measurement apparatus that can be described based on general understanding of the technical field to which the present disclosure pertains.

For example, the measurement section 305 may perform RRM (Radio Resource Management) measurement, CSI (Channel State Information) measurement, and so on, based on the received signal. The measurement section 305 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 301.

Note that the transmitting/receiving section 103 may transmit, to the user terminal 20, configuration information (at least one of, for example, a CSI-MeasConfig information element (IE) of RRC, a CSI-ResourceConfig IE, a CSI-ReportConfig IE, and so on) related to measurement (or measurement reporting or reporting) for channel state information (CSI). The transmitting/receiving section 103 may receive the CSI transmitted from the user terminal 20.

(User Terminal)

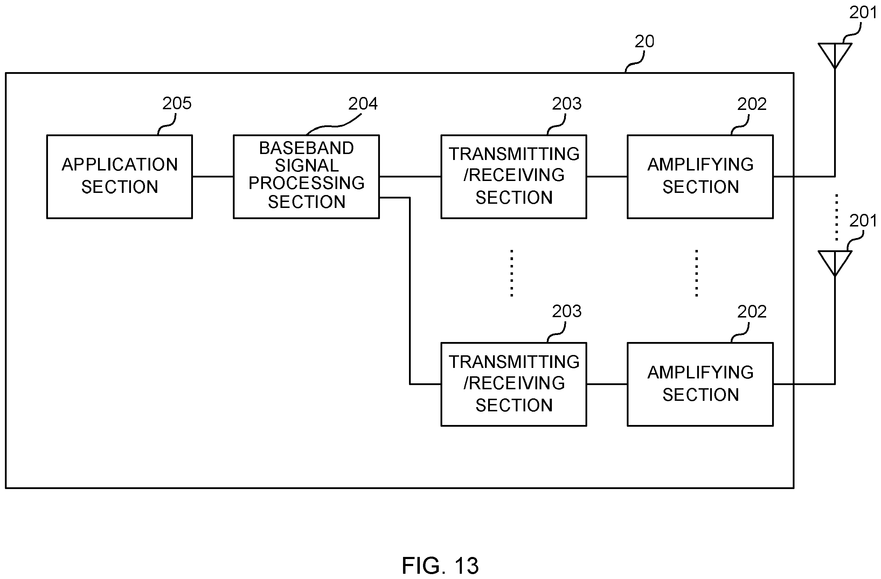

FIG. 13 is a diagram to show an example of an overall structure of a user terminal according to one embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present disclosure pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

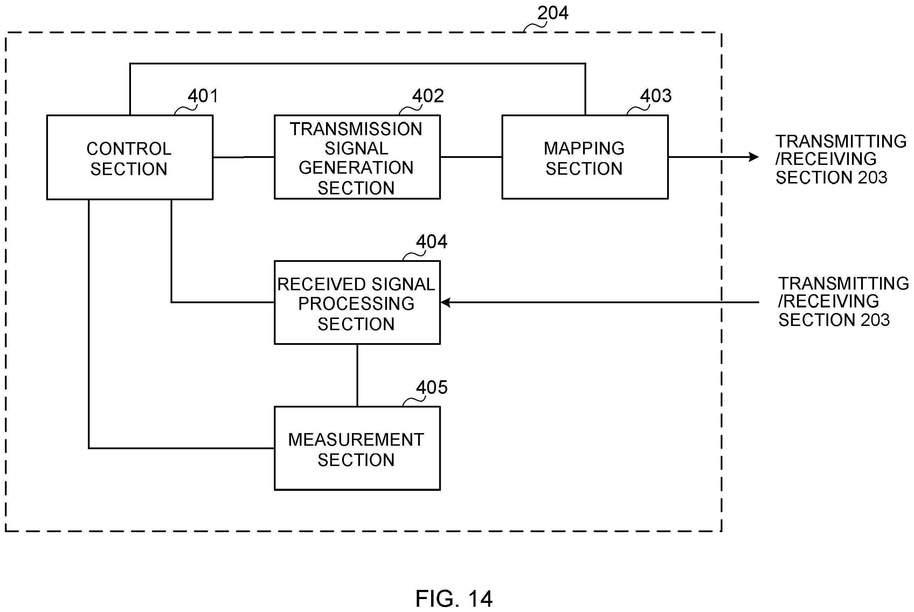

FIG. 14 is a diagram to show an example of a functional structure of a user terminal according to one embodiment. Note that, the present example primarily shows functional blocks that pertain to characteristic parts of the present embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit or control apparatus that can be described based on general understanding of the technical field to which the present disclosure pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the base station 10, from the received signal processing section 404. The control section 401 controls generation of an uplink control signal and/or an uplink data signal, based on the results of determining necessity or not of retransmission control to a downlink data signal and on a downlink control signal and so on.

The control section 401 may control monitoring of the DCI that is CRC scrambled with a certain identifier (at least one of, for example, C-RNTI, CS-RNTI, MCS-C-RNTI, SI-RNTI, P-RNTI, RA-RNTI, TC-RNTI, INT-RNTI, SFI-RNTI, TPC-PUSCH-RNTI, TPC-PUCCH-RNTI, TPC-SRS-RNTI, and SP-CSI-RNTI).

In a case that the control section 401 acquires a variety of information reported by the base station 10 from the received signal processing section 404, the control section 401 may update parameters to use for control, based on the information.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present disclosure pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals are, for example, downlink signals transmitted from the base station 10 (downlink control signals, downlink data signals, downlink reference signals and so on). The received signal processing section 404 can be constituted with a signal processor, a signal processing circuit or signal processing apparatus that can be described based on general understanding of the technical field to which the present disclosure pertains. The received signal processing section 404 can constitute the receiving section according to the present disclosure.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs at least one of the received signal and the signal after the receiving process to the measurement section 405.

The measurement section 405 conducts measurements with respect to the received signals. The measurement section 405 can be constituted with a measurer, a measurement circuit or measurement apparatus that can be described based on general understanding of the technical field to which the present disclosure pertains. The measurement section 405 may constitute at least a part of the receiving section in the present disclosure.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

The transmitting/receiving section 203 may receive a plurality of downlink signals (PDSCH, PDCCH, RS (SS/PBCH block, and CSI-RS)). The control section 401 may determine an uplink control channel (PUCCH) resource and spatial relation information (for example, PUCCH spatial relation information, beams, and spatial domain filters) for transmission of at least one piece of uplink control information (UCI) based on the plurality of downlink signals.

The control section 401 may determine one uplink control channel resource (for example, one PUCCH resource) and one piece of spatial relation information (for example, one piece of PUCCH spatial relation information), and use the one uplink control channel resource and the one piece of spatial relation information for transmission of one piece of uplink control information (for example, one piece of UCI) based on the plurality of downlink signals (for example, N PDSCHs) (Aspect 1).

The control section 401 may determine a plurality of uplink control channel resources (for example, N PUCCH resources) corresponding to the respective plurality of downlink signals (for example, N PDSCHs), determine a plurality of pieces of spatial relation information (for example, N pieces of PUCCH spatial relation information) corresponding to the respective plurality of downlink signals, determine a plurality of pieces of uplink control information (for example, N pieces of UCI) based on the respective plurality of downlink signals, and use, for transmission of each of the plurality of pieces of uplink control information, the corresponding uplink control channel resource and the corresponding spatial relation information (Aspect 2-1).

The control section 401 may determine at least one uplink control channel resource (for example, one PUCCH resource or N PUCCH resources), determine a plurality of pieces of spatial relation information (for example, N pieces of PUCCH spatial relation information) corresponding to the respective plurality of downlink signals (for example, N PDSCHs), determine one piece of uplink control information (for example, one piece of UCI) based on the plurality of downlink signals, and use the at least one uplink control channel resource and the plurality of pieces of spatial relation information for repeated transmission of the one piece of uplink control information (Aspect 2-2).

The control section 401 may support simultaneous transmission of a plurality of uplink signals using a respective plurality of pieces of spatial relation information (Aspects 4 and 5).

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

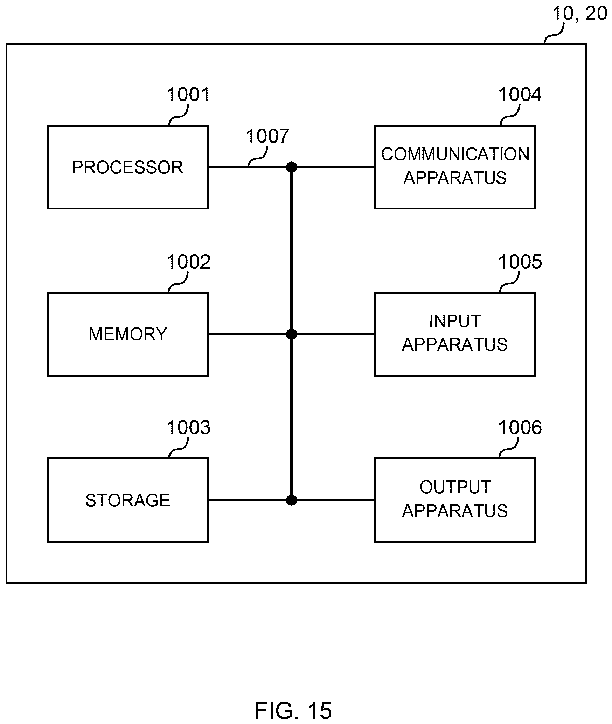

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and so on may be implemented by the communication apparatus 1004. In the transmitting/receiving section 103 (203), the transmitting section 103a (203a) and the receiving section 103b (203b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an ASIC (Application-Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "transmission time interval (TTI)," a plurality of consecutive subframes may be referred to as a "TTI" or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a BWP for the UL (UL BWP) and a BWP for the DL (DL BWP). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure are used interchangeably.

In the present disclosure, the terms such as "precoding," a "precoder," a "weight (precoding weight)," "quasi-co-location (QCL)," a "TCI state (Transmission Configuration Indication state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "base station," a "fixed station," a "NodeB," an "eNodeB (eNB)," a "gNodeB (gNB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving body may be a vehicle (for example, a car, an airplane, and the like), may be a moving body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an IoT (Internet of Things) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "D2D (Device-to-Device)," "V2X (Vehicle-to-Everything)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should

**EP 3 852 460 A1**

be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A user terminal comprising:

   a receiving section that receives a plurality of downlink signals; and
   a control section that determines an uplink control channel resource and spatial relation information for transmission of at least one piece of uplink control information based on the plurality of downlink signals.

2. The user terminal according to claim 1, wherein
   the control section determines one uplink control channel resource and one piece of spatial relation information, and uses the one uplink control channel resource and the one piece of spatial relation information for transmission of one piece of uplink control information based on the plurality of downlink signals.

3. The user terminal according to claim 1, wherein
   the control section determines a plurality of uplink control channel resources corresponding to the respective plurality of downlink signals, determines a plurality of pieces of spatial relation information corresponding to the respective plurality of downlink signals, and determines a plurality of pieces of uplink control information based on the respective plurality of downlink signals, and
   the control section uses, for transmission of each of the plurality of pieces of uplink control information, the corresponding uplink control channel resource and the corresponding spatial relation information.

4. The user terminal according to claim 1, wherein
   the control section determines at least one uplink control channel resource, determines a plurality of pieces of spatial relation information corresponding to the respective plurality of downlink signals, and determines one piece of uplink control information based on the plurality of downlink signals, and
   the control section uses the at least one uplink control channel resource and the plurality of pieces of spatial relation information for repeated transmission of the one piece of uplink control information.

5. The user terminal according to any one of claims 1 to 3, wherein
   the control section reports capability information indicating support of simultaneous transmission of a plurality of uplink signals using a respective plurality of pieces of spatial relation information.

6. A radio communication method for a user terminal, the radio communication method comprising:

   receiving a plurality of downlink signals; and
   determining an uplink control channel resource and spatial relation information for transmission of at least one piece of uplink control information based on the plurality of downlink signals.

PUCCH
RESOURCE
SET 1

PUCCH
RESOURCE
SET 2

PUCCH
RESOURCE
SET 3

PUCCH
RESOURCE
SET 4

PUCCH
MAXIMUM
RESOURCE
NUMBER
=8

PUCCH
MAXIMUM
RESOURCE
NUMBER
=8

PUCCH
MAXIMUM
RESOURCE
NUMBER
=8

PUCCH
MAXIMUM
RESOURCE
NUMBER
=32

FIG. 1

PUCCH SPATIAL RELATION INFORMATION
INDICATOR MAC CE

| R | SERVING CELL ID | | | | | BWP ID | | OCTET 1 |
|---|---|---|---|---|---|---|---|---|
| R | PUCCH RESOURCE ID | | | | | | | OCTET 2 |
| $S_7$ | $S_6$ | $S_5$ | $S_4$ | $S_3$ | $S_2$ | $S_1$ | $S_0$ | OCTET 3 |

FIG. 2

FIG. 3A

FIG. 3B

FIG. 4

EP 3 852 460 A1

FIG. 5

FIG. 6A

PUCCH RESOURCE SET GROUP 1

| PUCCH RESOURCE SET 1 | PUCCH RESOURCE SET 2 | PUCCH RESOURCE SET 3 | PUCCH RESOURCE SET 4 |
|---|---|---|---|
| MAXIMUM RESOURCE NUMBER =32 | MAXIMUM RESOURCE NUMBER =8 | MAXIMUM RESOURCE NUMBER =8 | MAXIMUM RESOURCE NUMBER =8 |

FIG. 6B

PUCCH RESOURCE SET GROUP 2

| PUCCH RESOURCE SET 1 | PUCCH RESOURCE SET 2 | PUCCH RESOURCE SET 3 | PUCCH RESOURCE SET 4 |
|---|---|---|---|
| MAXIMUM RESOURCE NUMBER =32 | MAXIMUM RESOURCE NUMBER =8 | MAXIMUM RESOURCE NUMBER =8 | MAXIMUM RESOURCE NUMBER =8 |

PUCCH SPATIAL RELATION INFORMATION
INDICATOR MAC CE

| R | SERVING CELL ID | | BWP ID | OCTET 1 |
| R | PUCCH RESOURCE ID | | | OCTET 2 |
| $S_7$ | $S_6$ $S_5$ $S_4$ $S_3$ $S_2$ | $S_1$ | $S_0$ | OCTET 3 |

1 BIT OR 2 BITS USED FOR AT LEAST ONE OF PUCCH
RESOURCE ID, PUCCH RESOURCE SET GROUP ID,
PANEL/TRP/PDSCH/CW/DMRS PORT GROUP ID

FIG. 7

## FIG. 8A

PUCCH RESOURCE SET GROUP 1

| PUCCH RESOURCE SET 1 | PUCCH RESOURCE SET 2 | PUCCH RESOURCE SET 3 | PUCCH RESOURCE SET 4 |
|---|---|---|---|
| MAXIMUM RESOURCE NUMBER =16 | MAXIMUM RESOURCE NUMBER =4 | MAXIMUM RESOURCE NUMBER =4 | MAXIMUM RESOURCE NUMBER =4 |

## FIG. 8B

PUCCH RESOURCE SET GROUP 2

| PUCCH RESOURCE SET 1 | PUCCH RESOURCE SET 2 | PUCCH RESOURCE SET 3 | PUCCH RESOURCE SET 4 |
|---|---|---|---|
| MAXIMUM RESOURCE NUMBER =16 | MAXIMUM RESOURCE NUMBER =4 | MAXIMUM RESOURCE NUMBER =4 | MAXIMUM RESOURCE NUMBER =4 |

FIG. 9

EP 3 852 460 A1

40

CORE NETWORK

30

HIGHER STATION
APPARATUS

1

C1

12a

11

12c

C2

20

12b

BACKHAUL
LINK

C2

C2

FIG. 10

FIG. 11

101

101

102 AMPLIFYING SECTION

102 AMPLIFYING SECTION

10

103 TRANSMITTING /RECEIVING SECTION

103 TRANSMITTING /RECEIVING SECTION

104 BASEBAND SIGNAL PROCESSING SECTION

105 CALL PROCESSING SECTION

106 COMMUNICATION PATH INTERFACE

TO HIGHER STATION APPARATUS 30 OR TO OTHER RADIO BASE STATIONS 10

FIG. 12

FIG. 13

EP 3 852 460 A1

FIG. 14

EP 3 852 460 A1

10, 20

1001

PROCESSOR

1007

1004

COMMUNICATION
APPARATUS

1002

MEMORY

1005

INPUT
APPARATUS

1003

STORAGE

1006

OUTPUT
APPARATUS

FIG. 15

**INTERNATIONAL SEARCH REPORT**

| International application No. |
| --- |
| PCT/JP2018/033709 |

A. CLASSIFICATION OF SUBJECT MATTER
Int. Cl. H04W72/04(2009.01)i, H04W16/28(2009.01)i

According to International Patent Classification (IPC) or to both national classification and IPC

B. FIELDS SEARCHED

Minimum documentation searched (classification system followed by classification symbols)
Int. Cl. H04W4/00-99/00

Documentation searched other than minimum documentation to the extent that such documents are included in the fields searched
Published examined utility model applications of Japan    1922-1996
Published unexamined utility model applications of Japan    1971-2018
Registered utility model specifications of Japan    1996-2018
Published registered utility model applications of Japan    1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | Huawei, HiSilicon, Enhancements on multi-TRP/panel transmission in NR, 3GPP TSG RAN WG1 Meeting #94 R1-1809117, 11 August 2018 | 1-6 |
| Y | MediaTek Inc., MAC CEs for Beam Management and CSI Acquisition, 3GPP TSG-RAN2#101 R2-1802405, 16 February 2018 | 1-6 |
| Y | 3GPP TS 38.213 U15.2.0, 29 June 2018, pages 61-62 | 4 |
| Y | ZTE, Enhancements on multi-beam operation, 3GPP TSG RAN WG1 Meeting #94 R1-1808199, 11 August 2018 | 5 |

☐ Further documents are listed in the continuation of Box C. ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 26.10.2018 | 13.11.2018 |

| Name and mailing address of the ISA/ <br> Japan Patent Office <br> 3-4-3, Kasumigaseki, Chiyoda-ku, <br> Tokyo 100-8915, Japan | Authorized officer <br><br> Telephone No. |
| --- | --- |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010